# DEMANDE DE BREVET EUROPEEN

(11) **EP 4 843 890 A1**
(43) Date de publication de la demande: **25.11.2026**
(21) Numéro de dépôt: 26179477.0
(22) Date de dépôt: 19.05.2026
(51) Int. Cl.: B64D 27/40

(54) **SYSTÈME DE PROPULSION POUR AÉRONEF COMPORTANT UN MÂT RÉACTEUR, UN TURBORÉACTEUR ET DES MOYENS DE FIXATION DU TURBORÉACTEUR AU MÂT RÉACTEUR**

(30) Priorité: 23.05.2025 FR 2505560
(71) Demandeur: Airbus Operations S.A.S., 31060 Toulouse (FR)
(72) Inventeur: PAUTIS, Olivier, 31060 TOULOUSE (FR); COMBES, Pierre-Antoine, 31060 TOULOUSE (FR); GRIMAL, Fabrice, 31060 TOULOUSE (FR)
(74) Mandataire: Cabinet Le Guen Maillet

(57) **Abrégé**

L'invention concerne un système de propulsion (400) pour aéronef comportant un mât réacteur (102) avec un nez (102a), un turboréacteur (104) présentant un carter (104a), deux manilles centrales (410a-b) et deux manilles extérieures (409a-b) fixées de manière articulée au nez (102a) par un premier point de liaison (112a) et fixées de manière articulée au carter (104a) par un deuxième point de liaison (112b) et une manille latérale (116) fixée de manière articulée entre le nez (102a) et le carter (104a) par un point de liaison centrale (118a) et deux points de liaison latérale (118b) disposés de part et d'autre d'un plan médian vertical (P).

Avec un tel arrangement, le montage du turboréacteur au mât réacteur est simplifié et à encombrement réduit.

## Description

### DOMAINE TECHNIQUE

La présente invention concerne un système de propulsion pour aéronef, où le système de propulsion comporte un turboréacteur, un mât réacteur et des moyens de fixation assurant la fixation du turboréacteur au mât réacteur, ainsi qu'un aéronef comportant un tel système de propulsion.

### ÉTAT DE LA TECHNIQUE ANTÉRIEURE

Un aéronef comporte classiquement une pluralité de systèmes de propulsion. Chaque système de propulsion est généralement fixé sous une aile de l'aéronef et il comporte un mât réacteur fixé sous l'aile, un turboréacteur et des moyens de fixation qui assurent la fixation du turboréacteur sous le mât réacteur.

Bien que les systèmes de propulsion actuels donnent satisfaction, le montage et le démontage des moyens de fixation sont généralement longs et complexes et il est souhaitable de trouver un arrangement qui diminue le temps d'installation et la complexité, en outre, l'encombrement des moyens de fixation est relativement important.

Les documents FR-A-3 098 793, FR-A-3 150 504 et FR-A-3 096 028 divulguent des systèmes de propulsion de l'état de la technique.

### EXPOSÉ DE L'INVENTION

Un objet de la présente invention est de proposer un système de propulsion pour aéronef comportant un turboréacteur, un mât réacteur et des moyens de fixation assurant la fixation du turboréacteur au mât réacteur dont le montage/démontage est facilité et dont l'encombrement est réduit.

À cet effet, est proposé un système de propulsion pour un aéronef comportant :
- un mât réacteur avec un nez,
- un turboréacteur présentant un carter s'étendant le long d'une direction longitudinale et présentant un plan médian vertical,
- au moins une manille centrale inscrite dans un plan parallèle au plan médian vertical, fixée de manière articulée au nez par un premier point de liaison et fixée de manière articulée au carter par au moins un deuxième point de liaison, et
- une manille latérale fixée de manière articulée entre le nez et le carter par un point de liaison centrale et deux points de liaison latérale disposés de part et d'autre du plan médian vertical, où il y a deux manilles centrales disposées de part et d'autre du plan médian vertical et où le système de propulsion comporte en outre, deux manilles extérieures disposées de part et d'autre du plan médian vertical, à l'extérieur par rapport à la manille centrale qui est du même côté du plan médian vertical et où chaque manille extérieure est inscrite dans un plan parallèle au plan médian vertical et est fixée de manière articulée au nez par le premier point de liaison et de manière articulée au carter par ledit au moins un deuxième point de liaison.

Avec un tel système, le montage du turboréacteur au mât réacteur est simplifié et l'encombrement est réduit.

Avantageusement, il y a un seul deuxième point de liaison par manille centrale.

Avantageusement, les deux premiers points de liaison et les deuxièmes points de liaison sont inscrits dans un plan perpendiculaire à la direction longitudinale.

Avantageusement, le nez est constitué de deux ferrures disposées de part et d'autre du plan médian vertical, chaque ferrure présente une extension, où chaque extension forme une chape mâle et la manille centrale et la manille extérieure qui est du même côté du plan médian vertical forment ensemble une chape femelle dans laquelle la chape mâle est montée pour former le premier point de liaison.

Avantageusement, le point de liaison centrale assure la fixation entre le nez et la manille latérale et chaque point de liaison latérale assure la fixation entre le carter et la manille latérale.

Avantageusement, chaque ferrure présente une extension avant et une extension arrière, les deux extensions avant forment ensemble une paroi d'une chape femelle centrale, les deux extensions arrière forment ensemble l'autre paroi de la chape femelle centrale, et la manille latérale forme une chape mâle centrale montée dans la chape femelle centrale pour former le point de liaison centrale. Avantageusement, les premiers points de liaison et les deuxièmes points de liaison forment chacun au moins une liaison pivot dont l'axe est perpendiculaire au plan médian vertical, et le point de liaison centrale et les deux points de liaison latérale forment chacun au moins une liaison pivot dont l'axe est parallèle à la direction longitudinale.

L'invention propose également un aéronef comportant un système de propulsion selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue en perspective d'un système de propulsion selon l'invention,
Fig. 3 est une vue de face du système de propulsion de la Fig. 1, et
Fig. 4 est une vue de côté et en coupe selon le plan IV-IV de la Fig. 3.

### EXPOSÉ DÉTAILLÉ DE MODES DE RÉALISATION

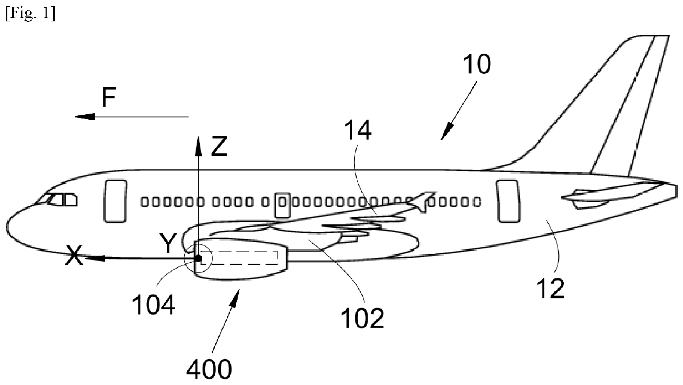

La Fig. 1 montre un aéronef 10 qui comporte un système de propulsion 400 selon l'invention. L'aéronef 10 comporte de part et d'autre d'un fuselage 12, une aile 14 à laquelle est fixé un mât réacteur 102. Le système de propulsion 400 comporte le mât réacteur 102 et un turboréacteur 104.

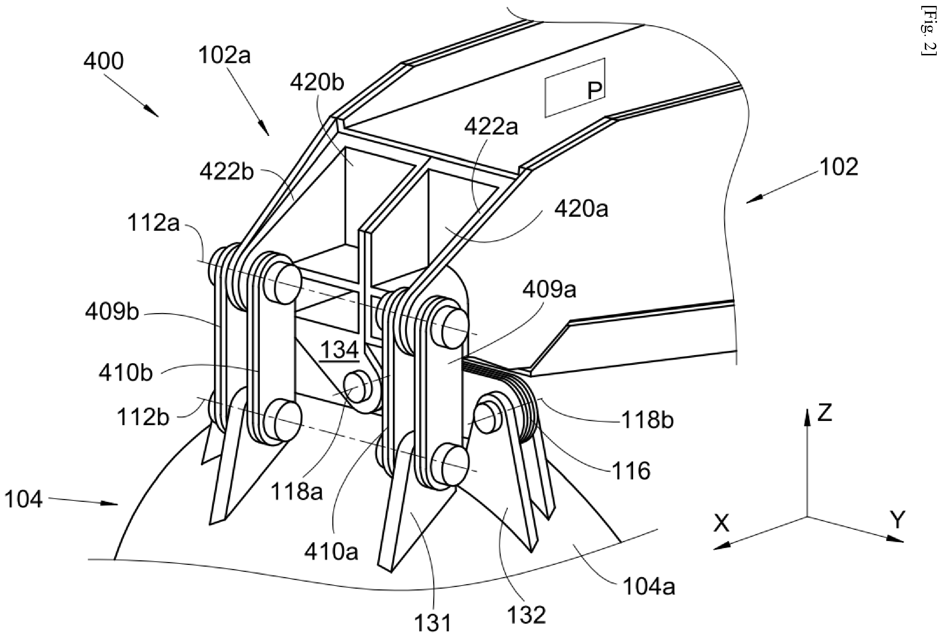

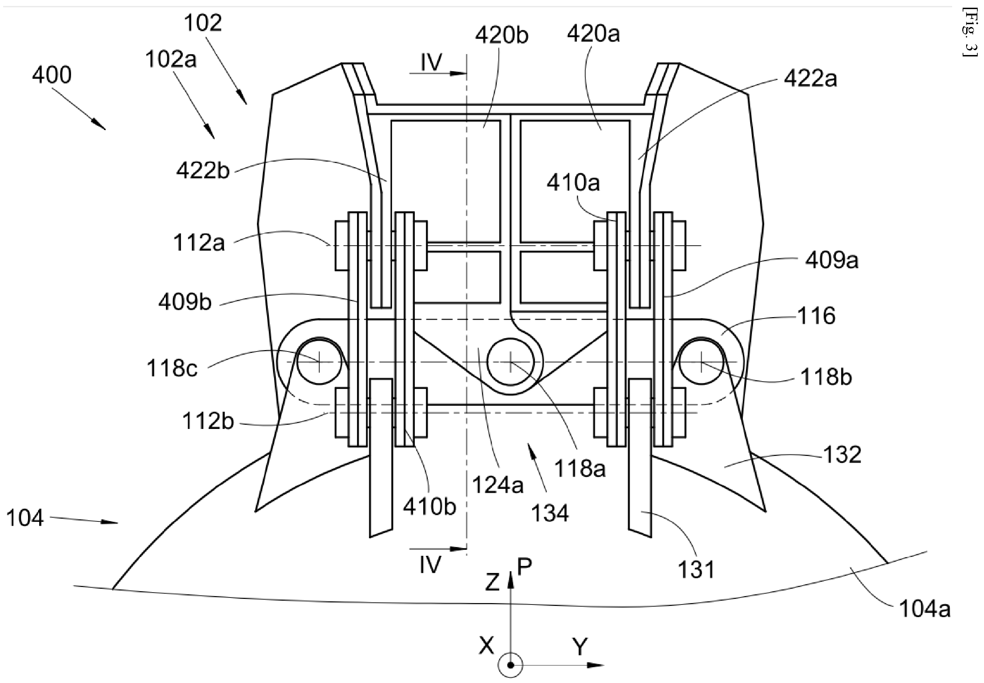

Les Figs. 2 à 4 montrent un système de propulsion 400 selon l'invention.

Le système de propulsion 400 comporte également des moyens de fixation qui assurent la fixation du turboréacteur 104 au mât réacteur 102.

Dans la description qui suit, les termes relatifs à une position sont pris en référence à un aéronef en position normale de vol, c'est-à-dire comme il est représenté sur la Fig. 1 et les positions « avant » et « arrière » sont prises par rapport à l'avant et l'arrière du turboréacteur et par rapport à la direction d'avancement F de l'aéronef 10 lorsque le turboréacteur 104 fonctionne.

Dans la description qui suit, et par convention, on appelle X, la direction longitudinale du turboréacteur 104 qui est parallèle à l'axe longitudinal du turboréacteur 104, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

Le turboréacteur 102 présente une forme de révolution autour de son axe longitudinal et il comporte un carter 104a qui s'étend ainsi le long de la direction longitudinale X et qui présente un plan médian vertical P (XZ). Le système de propulsion 400 est globalement symétrique par rapport au plan médian vertical P.

Le mât réacteur 102 présente un nez 102a qui s'étend à l'avant du mât réacteur 102.

Le système de propulsion 400 comporte au moins une manille centrale 410a-b inscrite dans un plan parallèle au plan médian vertical P. Ladite au moins une manille centrale 410a-b est fixée de manière articulée au nez 102a par un premier point de liaison 112a et elle est fixée de manière articulée au carter 104a par au moins un deuxième point de liaison 112b. Dans le mode de réalisation de l'invention représenté ici, il y a un seul deuxième point de liaison 112b entre chaque manille centrale 410a-b et le carter 104a, mais dans un autre mode de réalisation, il pourrait y en avoir deux disposés l'un derrière l'autre parallèlement à la direction longitudinale X.

Le système de propulsion 400 comporte également une manille latérale 116 qui est fixée de manière articulée entre le nez 102a et le carter 104a par un point de liaison centrale 118a et par deux points de liaison latérale 118b-c. Les deux points de liaison latérale 118b-c sont disposés symétriquement de part et d'autre du plan médian vertical P et préférentiellement symétriquement par rapport au plan médian vertical P, tandis que le point de liaison centrale 118a est au niveau du plan médian vertical P comme cela est visible sur les Figs.

Avec un tel arrangement, le montage du turboréacteur 104 au mât réacteur 102 est simplifié car il suffit de mettre en place les points de liaison décrits.

Les différents points de liaison prennent la forme de liaison du type chape, ce qui permet de réaliser les points de liaison uniquement par mise en place d'un axe de liaison entre une chape mâle et une chape femelle.

Dans le mode de réalisation de l'invention représenté ici, il y a deux manilles centrales 410a-b qui sont disposées symétriquement de part et d'autre du plan médian vertical P et de la même manière, les points de liaison 112a-b sont disposées symétriquement de part et d'autre du plan médian vertical P.

En outre, le système de propulsion 400 comporte deux manilles extérieures 409a-b qui sont disposées symétriquement de part et d'autre du plan médian vertical P et à l'extérieur par rapport à la manille centrale 410a-b qui est du même côté du plan médian vertical P.

Chaque manille extérieure 409a-b est également inscrite dans un plan parallèle au plan médian vertical P et elle est fixée de manière articulée au nez 102a par le premier point de liaison 112a et de manière articulée au carter 104a par ledit au moins un deuxième point de liaison 112b.

Un tel arrangement permet de réduire l'encombrement des moyens de fixation.

Chaque manille centrale 410a-b et chaque manille extérieure 409a-b prennent globalement la forme d'une plaque plate de forme oblongue avec un point de liaison 112a-b à chaque extrémité. Les fixations de la manille centrale 410a-b et de la manille extérieure 409a-b au carter 104a du turboréacteur 104 s'effectuent par l'intermédiaire de chapes centrales mâles 131 solidaires du carter 104a où il y a une chape centrale mâle 131 par paire d'une manille centrale 410a-b et d'une manille extérieure 409a-b, celle-ci formant une chape femelle dans laquelle est logée la chape centrale mâle 131 et fixée articulée par la mise en place d'un axe traversant les chapes centrales mâles 131 et la manille centrale 410a-b et la manille extérieure 409a-b à travers des alésages prévus à cet effet pour réaliser une liaison chape.

Ici, les deux premiers points de liaison 112a et les deuxièmes points de liaison 112b sont inscrits dans un plan perpendiculaire à la direction longitudinale X, c'est-à-dire que les axes représentant ces points de liaison 112a-b sont inscrits dans ledit plan perpendiculaire à la direction longitudinale X.

La manille latérale 116 est fixée au niveau du point de liaison centrale 118a et de chaque point de liaison latérale 118b-c par des liaisons du type chape où la manille latérale 116 constitue la chape mâle logée et montée articulée dans une chape femelle par mise en place d'un axe traversant les chapes. L'axe de chaque liaison chape est ici parallèle à la direction longitudinale X.

L'axe du point de liaison centrale 118a est inclus dans le plan médian vertical P et les axes des points de liaison latérale 118b-c sont disposés symétriquement de part et d'autre du plan médian vertical P.

La longueur de la manille latérale 116 qui s'étend entre les points de liaison latérale 118b-c est perpendiculaire au plan médian vertical P.

Les efforts en Z sont repris par la ou chaque manille centrale 410a-b et les efforts en Y sont repris par la manille latérale 116.

Pour des raisons de sécurité, la manille latérale 116 est ici quadruple, c'est-à-dire qu'elle est constituée de quatre sous-manilles identiques et accolées l'une à l'autre.

Pour des raisons de sécurité, le nez 102a est constitué de deux ferrures 420a-b qui sont indépendantes l'une de l'autre et qui sont disposées de part et d'autre du plan médian vertical P. Chaque ferrure 420a-b présente une extension 422a-b qui s'étend vers l'avant du nez 102a et qui est à distance de l'extension 422b-a de l'autre ferrure 420b-a.

Chaque extension 422a-b forme ainsi ensemble une chape mâle et la manille centrale 410a-b et la manille extérieure 409a-b qui est du même côté du plan médian vertical P forment ensemble une chape femelle dans laquelle la chape mâle est montée articulée pour former le premier point de liaison 112a. À cette fin, un axe traversant est inséré dans les chapes à travers des alésages prévus à cet effet pour réaliser la liaison chape du premier point de liaison 112a.

Pour des raisons de sécurité, chaque manille centrale 410a-b et chaque manille extérieure 409a-b sont ici doubles, c'est-à-dire qu'elles sont constituées de deux sous-manilles identiques et accolées l'une à l'autre.

Les deux sous-manilles formant une manille centrale 410a-b ou une manille extérieure 409a-b forment une paroi de la chape femelle du premier point de liaison 112a dans laquelle est logée une chape centrale mâle 131. Selon un mode de réalisation particulier, pour des raisons de sécurité, chaque chape centrale mâle 131 peut être doublée.

Dans le mode de réalisation de l'invention présenté ici, le point de liaison centrale 118a assure la fixation entre le nez 102a et la manille latérale 116 et chaque point de liaison latérale 118b-c assure la fixation entre le carter 104a et la manille latérale 116. Dans un autre mode de réalisation non représenté, le point de liaison centrale 118a assure la fixation entre le carter 104a et la manille latérale 116 et chaque point de liaison latérale 118b-c assure la fixation entre le nez 102a et la manille latérale 116.

Le nez 102a comporte ainsi une chape femelle centrale 134 dans laquelle loge la manille latérale 116 et où un axe est logé, traversant la manille latérale 116 et la chape femelle centrale 134 à travers des alésages prévus à cet effet pour réaliser la liaison chape du point de liaison centrale 118a.

Le carter 104a présente de part et d'autre du plan médian vertical P, une chape femelle latérale 132 dans laquelle loge la manille latérale 116 et où un axe est logé traversant la manille latérale 116 et la chape femelle latérale 132 à travers des alésages prévus à cet effet pour réaliser la liaison chape de chaque point de liaison latérale 118b-c.

Chaque ferrure 420a-b présente une extension avant 124a et une extension arrière 124b. Chaque extension 124a-b s'étend vers le carter 104a et l'extension avant 124a est disposée à l'avant par rapport à l'extension arrière 124b.

L'extension 124a est disposée vers le moteur et axialement à l'avant, tandis que l'extension 124b est disposée vers le moteur et axialement vers l'arrière.

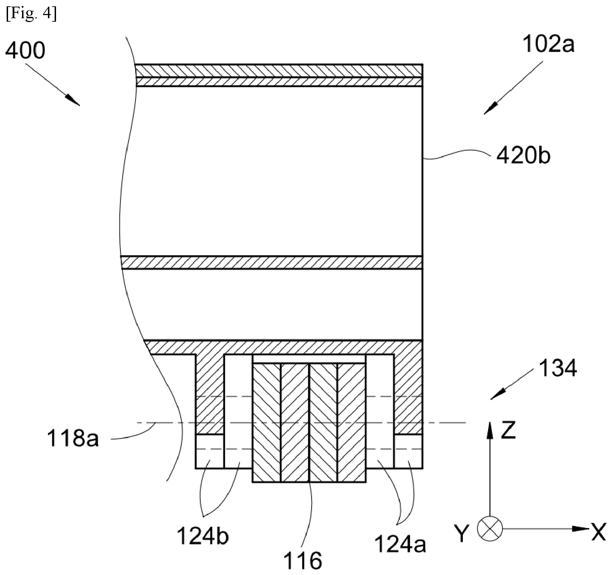

Dans le mode de réalisation particulier représenté sur la Fig. 4, l'extension avant 124a de la ferrure bâbord 420a est disposée à l'avant par rapport à l'extension avant 124a de la ferrure tribord 420b, et l'extension arrière 124b de la ferrure tribord 420b est disposée à l'avant par rapport à l'extension arrière 124b de la ferrure bâbord 420a. Les deux extensions avant 124a sont à l'avant par rapport aux deux extensions arrière 124b.

Les deux extensions avant 124a peuvent être accolées l'une à l'autre et les deux extensions arrière 124b peuvent être accolées l'une à l'autre. Il y a un espace entre les deux extensions avant 124a et les deux extensions arrière 124b pour former la chape femelle centrale 134. Selon un mode alternatif, les deux extensions avant 124a, respectivement les deux extensions arrière 124b ne sont pas accolées l'une à l'autre.

Les deux extensions avant 124a forment ainsi ensemble une paroi de la chape femelle centrale 134 et les deux extensions arrière 124b forment ainsi ensemble l'autre paroi de la chape femelle centrale 134. La manille latérale 116 forme la chape mâle centrale et est montée dans la chape femelle centrale 134 par l'intermédiaire d'un axe traversant la manille latérale 116 et chaque extension 124a-b à travers des alésages prévus à cet effet pour former le point de liaison centrale 118a.

Dans l'autre mode de réalisation non représenté, le nez 102a comporte ainsi pour chaque point de liaison latérale 118b-c, de part et d'autre du plan médian vertical P, une chape femelle latérale dans laquelle loge la manille latérale 116, et où un axe est logé, traversant la manille latérale 116 et la chape femelle latérale à travers des alésages prévus à cet effet pour réaliser la liaison chape de chaque point de liaison latérale 118b-c. Le carter 104a présente une chape femelle centrale dans laquelle loge la manille latérale 116 et où un axe est logé, traversant la manille latérale 116 et la chape femelle centrale à travers des alésages prévus à cet effet pour réaliser la liaison chape du point de liaison centrale 118a.

Dans le mode de réalisation de l'invention représenté ici, le premier point de liaison 112a et le deuxième point de liaison 112b forment chacun une liaison pivot dont l'axe de rotation est perpendiculaire au plan médian vertical P, mais préférentiellement, une liaison rotule.

La sécurité est assurée par le doublement de tous les composants formant le chemin d'effort.

Dans le mode de réalisation présenté ici, le point de liaison centrale 118a et les deux points de liaison latérale 118b-c forment chacun au moins une liaison pivot dont l'axe est parallèle à la direction longitudinale X, mais préférentiellement, le point de liaison centrale 118a et l'un des deux points de liaison latérale 118b-c forment une liaison rotule.

L'autre point de liaison latérale 118c-b constitue alors un point de sécurité en attente qui ne devient actif que dans le cas d'une défaillance du chemin principal d'effort. L'axe dudit autre point de liaison latérale 118c-b est ainsi monté avec jeu dans les alésages associés.

D'une manière générale, pour des raisons de sécurité, l'axe de chaque liaison chape peut être doublé et comporter ainsi un axe intérieur logé dans un axe extérieur creux.

## Revendications

1. Système de propulsion (400) pour un aéronef (10) comportant :
- un mât réacteur (102) avec un nez (102a),
- un turboréacteur (104) présentant un carter (104a) s'étendant le long d'une direction longitudinale (X) et présentant un plan médian vertical (P),
- au moins une manille centrale (410a-b) inscrite dans un plan parallèle au plan médian vertical (P), fixée de manière articulée au nez (102a) par un premier point de liaison (112a) et fixée de manière articulée au carter (104a) par au moins un deuxième point de liaison (112b), et
- une manille latérale (116) fixée de manière articulée entre le nez (102a) et le carter (104a) par un point de liaison centrale (118a) et deux points de liaison latérale (118b-c) disposés de part et d'autre du plan médian vertical (P),
où il y a deux manilles centrales (410a-b) disposées de part et d'autre du plan médian vertical (P) et où le système de propulsion (400) comporte en outre, deux manilles extérieures (409a-b) disposées de part et d'autre du plan médian vertical (P), à l'extérieur par rapport à la manille centrale (410a-b) qui est du même côté du plan médian vertical (P) et où chaque manille extérieure (409a-b) est inscrite dans un plan parallèle au plan médian vertical (P) et est fixée de manière articulée au nez (102a) par le premier point de liaison (112a) et de manière articulée au carter (104a) par ledit au moins un deuxième point de liaison (112b).

2. Système de propulsion (400) selon la revendication 1, **caractérisé en ce qu'**il y a un seul deuxième point de liaison (112b) par manille centrale (410a-b).

3. Système de propulsion (400) selon la revendication 2, **caractérisé en ce que** les deux premiers points de liaison (112a) et les deuxièmes points de liaison (112b) sont inscrits dans un plan perpendiculaire à la direction longitudinale (X).

4. Système de propulsion (400) selon l'une des revendications 1 à 3, **caractérisé en ce que** le nez (102a) est constitué de deux ferrures (420a-b) disposées de part et d'autre du plan médian vertical (P), **en ce que** chaque ferrure (420a-b) présente une extension (422a-b), où chaque extension (422a-b) forme une chape mâle et **en ce que** la manille centrale (410a-b) et la manille extérieure (409a-b) qui est du même côté du plan médian vertical (P) forment ensemble une chape femelle dans laquelle la chape mâle est montée pour former le premier point de liaison (112a).

5. Système de propulsion (400) selon l'une des revendications 1 à 4, **caractérisé en ce que** le point de liaison centrale (118a) assure la fixation entre le nez (102a) et la manille latérale (116) et **en ce que** chaque point de liaison latérale (118b-c) assure la fixation entre le carter (104a) et la manille latérale (116).

6. Système de propulsion (400) selon les revendications 4 et 5, **caractérisé en ce que** chaque ferrure (420a-b) présente une extension avant (124a) et une extension arrière (124b), **en ce que** les deux extensions avant (124a) forment ensemble une paroi d'une chape femelle centrale (134), **en ce que** les deux extensions arrière (124b) forment ensemble l'autre paroi de la chape femelle centrale (134), et **en ce que** la manille latérale (116) forme une chape mâle centrale montée dans la chape femelle centrale (134) pour former le point de liaison centrale (118a).

7. Système de propulsion (400) selon l'une des revendications précédentes, **caractérisé en ce que** les premiers points de liaison (112a) et les deuxièmes points de liaison (112b) forment chacun au moins une liaison pivot dont l'axe est perpendiculaire au plan médian vertical (P), et **en ce que** le point de liaison centrale (118a) et les deux points de liaison latérale (118b-c) forment chacun au moins une liaison pivot dont l'axe est parallèle à la direction longitudinale (X).

8. Aéronef (10) comportant un système de propulsion (400) selon l'une des revendications précédentes.
